# EUROPEAN PATENT APPLICATION

(11) **EP 4 132 144 A1**
(43) Date of publication of application: **08.02.2023**
(21) Application number: 20926530.5
(22) Date of filing: 24.03.2020
(51) Int. Cl.: H04W 72/04, H04W 28/04

(54) **TERMINAL**

(71) Applicant: NTT DOCOMO, INC., Chiyoda-Ku Tokyo 100-6150 (JP)
(72) Inventor: YOSHIOKA Shohei, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2020/013152
(87) International publication number: WO 2021/192063

(57) **Abstract**

A terminal includes a receiving unit that receives data via a plurality of component carriers, and a transmitting unit that executes a predetermined transmission to transmit an acknowledgment for the plurality of component carriers.

## Description

### Technical Field

The present disclosure relates to a terminal that executes radio communication, and more particularly, to a terminal that executes radio communication using a plurality of component carriers.

### Background Art

The 3rd generation partnership project (3GPP) is progressing specification of 5th generation mobile communication system (hereinafter, 5G, referred to as new radio (NR) or next generation (NG)) and furthermore specification of next generation referred to as Beyond 5G, 5G Evolution, or 6G.

Release 15 and Release 16 (NR) of 3GPP specify an operation in a plurality of frequency ranges, specifically, a band including FR1 (410 MHz to 7.125 GHz) and FR2 (24.25 GHz to 52.6 GHz).

Further, NR that supports up to 71 GHz exceeding 52.6 GHz is also being studied (Non Patent Literature 1). Furthermore, Beyond 5G, 5G Evolution, or 6G (after Release-18) aims to support a frequency band exceeding 71 GHz.

### Citation List

### Non Patent Literature

Non Patent Literature 1: "New WID on Extending current NR operation to 71 GHz", RP-193229, 3GPP TSG RAN Meeting #86, 3GPP, December, 2019

### Summary of Invention

As described above, when the usable frequency band extends, it is assumed that more component carriers (CC) are highly likely to be set.

In the carrier aggregation (CA), the number of CCs that can be set is defined. For example, in 3GPP Release 15 and Release 16, the maximum number of CCs that can be set for a terminal (user equipment (UE)) is 16 in downlink (DL) and uplink (UL), respectively.

Under such a background, assuming a case where acknowledgment (HARQ-ACK) is generated for each TB transmitted via each of the plurality of CCs, the number of bits of HARQ-ACK becomes very large. On the other hand, since it is assumed that the channel qualities for the plurality of CCs are similar, it is assumed that a large correlation occurs between the plurality of CCs for positive/negative responses.

Therefore, the following disclosure is made in view of such a situation, and an object of the present disclosure is to provide a terminal that can implement efficient communication control of acknowledgment (HARQ-ACK) even when a plurality of component carriers (CCs) are set.

According to an aspect of the present disclosure, a terminal includes a receiving unit that receives data via a plurality of component carriers, and a transmitting unit that executes a predetermined transmission to transmit an acknowledgment for the plurality of component carriers.

### Brief Description of Drawings

Fig. 1 is an overall schematic configuration diagram of a radio communication system 10.
Fig. 2 is a diagram illustrating a frequency range used in the radio communication system 10.
Fig. 3 is a diagram illustrating a configuration example of radio frames, subframes, and slots used in the radio communication system 10.
Fig. 4 is a functional block configuration diagram of UE 200.
Fig. 5 is a diagram for describing a CC group.
Fig. 6 is a diagram for describing the CC group.
Fig. 7 is a diagram for describing HARQ-ACK.
Fig. 8 is a diagram illustrating Operation Example 1.
Fig. 9 is a diagram illustrating Operation Example 2.
Fig. 10 is a diagram for describing Modified Example 1.
Fig. 11 is a diagram illustrating an example of a hardware configuration of the UE 200.

### Description of Embodiments

Hereinafter, embodiments will be described with reference to the drawings. Note that the same functions or configurations will be denoted by the same or similar reference numerals, and a description thereof will be appropriately omitted.

### [Embodiments]

### (1) Overall Schematic Configuration of Radio Communication System

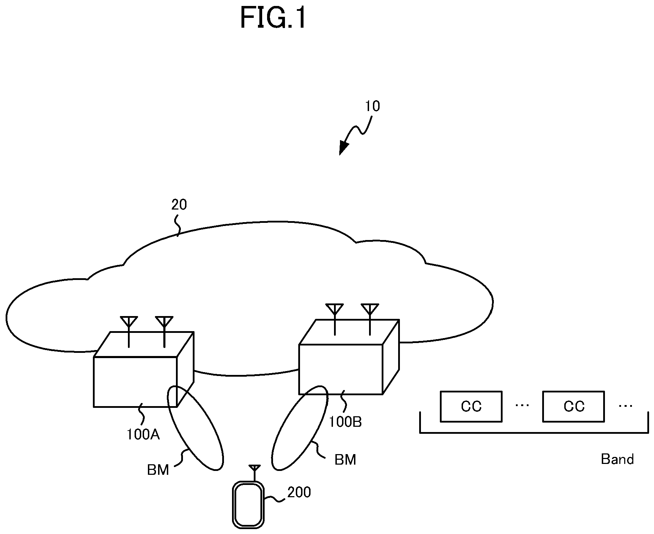

Fig. 1 is an overall schematic configuration diagram of a radio communication system 10 according to the present embodiment. The radio communication system 10 is a radio communication system according to 5G new radio (NR), and includes a next generation-radio access network 20 (hereinafter, referred to as NG-RAN 20) and a user terminal 200 (hereinafter, UE 200).

Note that the radio communication system 10 may be a radio communication system according to a method referred to as Beyond 5G, 5G Evolution, or 6G.

The NG-RAN 20 includes a radio base station 100A (hereinafter, referred to as a gNB 100A) and a radio base station 100B (hereinafter, referred to as a gNB 100B). Note that a specific configuration of the radio communication system 10 including the numbers of gNBs and UEs is not limited to an example illustrated in Fig. 1.

The NG-RAN 20 actually includes a plurality of NG-RAN nodes, specifically, gNBs (or ng-eNBs), and is connected to a 5G core network (5GC) (not illustrated). Note that the NG-RAN 20 and the 5GC may be simply expressed as "network".

The gNB 100 and the gNB 100B are 5G radio base stations, and execute 5G radio communication with the UE 200. The gNB 100, the gNB 100B, and the UE 200 can support massive multiple-input multiple-output (MIMO) that generates a beam (BM) with higher directivity, carrier aggregation (CA) that bundles and uses a plurality of component carriers (CCs), dual connectivity (DC) that simultaneously performs communication between the UE and each of two NG-RAN nodes, and the like, by controlling radio signals transmitted from a plurality of antenna elements.

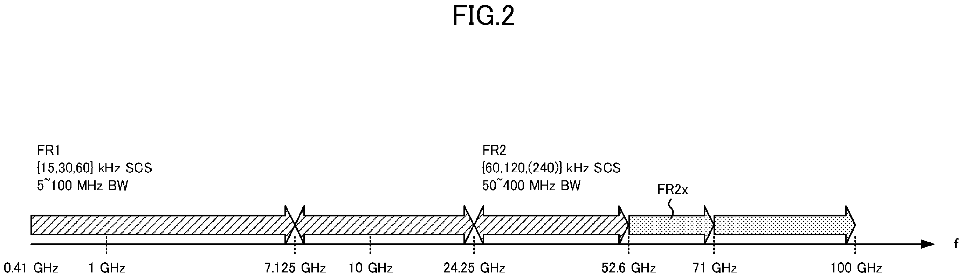

In addition, the radio communication system 10 supports a plurality of frequency ranges (FRs). Fig. 2 illustrates a frequency range used in the radio communication system 10.

As illustrated in Fig. 2, the radio communication system 10 corresponds to FR1 and FR2. Frequency bands of each FR are as follows.
- FR1: 410 MHz to 7.125 GHz
- FR2: 24.25 GHz to 52.6 GHz

In the FR1, sub-carrier spacing (SCS) of 15, 30, or 60 kHz may be used and a bandwidth (BW) of 5 to 100 MHz may be used. The FR2 has a frequency higher than that of the FR1, the SCS of 60 or 120 kHz (240 kHz may be included) may be used, and a bandwidth (BW) of 50 to 400 MHz may be used.

Note that the SCS may be interpreted as numerology. The numerology is defined in 3GPP TS38.300 and corresponds to one subcarrier spacing in a frequency domain.

Further, the radio communication system 10 supports a frequency band range higher than that of the FR2. Specifically, the radio communication system 10 supports a frequency band exceeding 52.6 GHz and up to 114.25 GHz. Such a high frequency band may be referred to as "FR2x" for convenience.

In order to solve such a problem, when using a band exceeding 52.6 GHz, cyclic prefix-orthogonal frequency division multiplexing (CP-OFDM)/discrete Fourier transform-spread (DFT-S-OFDM) having a larger sub-carrier spacing (SCS) is used may be applied.

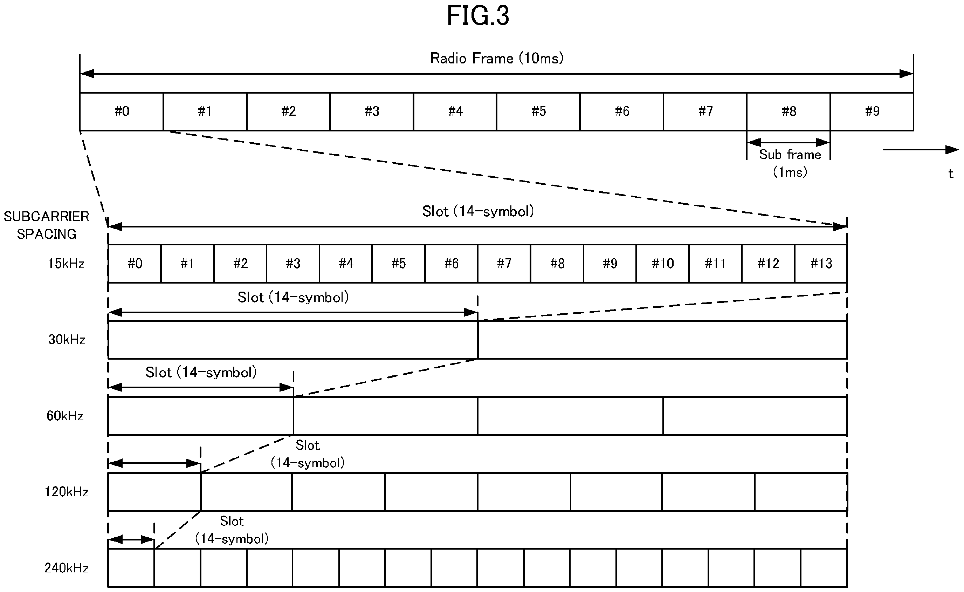

Fig. 3 illustrates a configuration example of radio frames, subframes, and slots used in the radio communication system 10.

As illustrated in Fig. 3, the configuration of 1 slot is composed of 14 symbols, and the larger (wider) the SCS is, the shorter the symbol period (and the slot period). The SCS is not limited to the interval (frequency) illustrated in Fig. 3. For example, 480 kHz, 960 kHz, or the like may be used.

Further, the number of symbols forming one slot may not necessarily be 14 symbols (for example, 28 and 56 symbols). Further, the number of slots per subframe may vary depending on the SCS.

Note that a time direction (t) illustrated in Fig. 3 may be referred to as a time domain, a symbol period, a symbol time, or the like. Further, a frequency direction may be referred to as a frequency domain, a resource block, a subcarrier, a bandwidth part (BWP), or the like.

### (2) Functional Block Configuration of Radio Communication System

Next, the functional block configuration of the radio communication system 10 will be described. Specifically, a functional block configuration of the UE 200 will be described.

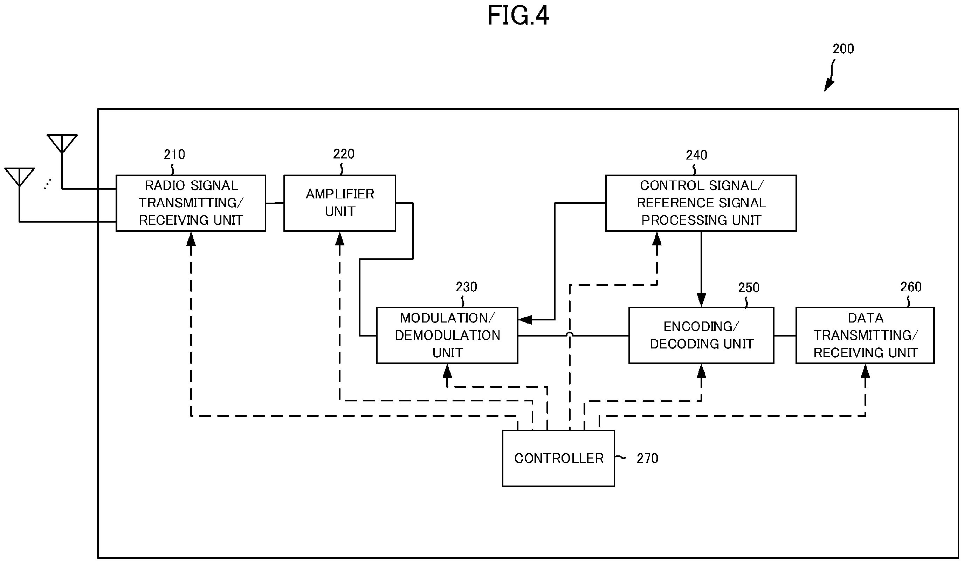

Fig. 4 is the functional block configuration diagram of the UE 200. As illustrated in Fig. 4, the UE 200 includes a radio signal transmitting and receiving unit 210, an amplifier unit 220, a modulation and demodulation unit 230, a control signal and reference signal processing unit 240, an encoding/decoding unit 250, a data transmitting and receiving unit 260, and a control unit 270.

The radio signal transmitting and receiving unit 210 transmits and receives a radio signal according to NR. The radio signal transmitting and receiving unit 210 corresponds to Massive MIMO, CA used by bundling a plurality of CCs, DC performing simultaneous communication between the UE and each of the two NG-RAN nodes, and the like.

In the embodiment, the radio signal transmitting and receiving unit 210 constitutes a receiving unit that receives data via a plurality of CCs. The data may be data received via a physical downlink shared channel (PDSCH).

The amplifier unit 220 is configured by a power amplifier (PA)/low noise amplifier (LAN) or the like. The amplifier unit 220 amplifies a signal output from the modulation and demodulation unit 230 to a predetermined power level. Further, the amplifier unit 220 amplifies an RF signal output from the radio signal transmitting and receiving unit 210.

The modulation and demodulation unit 230 executes data modulation and demodulation, transmit power setting, resource block allocation, and the like for each predetermined communication destination (gNB 100 or other gNBs). In the modulation and demodulation unit 230, cyclic prefix-orthogonal frequency division multiplexing (CP-OFDM)/discrete Fourier transform-spread (DFT-S-OFDM) may be applied. In addition, the DFT-S-OFDM may be used not only in the uplink (UL) but also in the downlink (DL).

The control signal and reference signal processing unit 240 executes processing regarding various control signals transmitted and received by the UE 200 and processing regarding various reference signals transmitted and received by the UE 200.

Specifically, the control signal and reference signal processing unit 240 receives various control signals transmitted from the gNB 100 via a predetermined control channel, for example, a control signal of a radio resource control layer (RRC). In addition, the control signal and reference signal processing unit 240 transmits various control signals to the gNB 100 via a predetermined control channel.

The control signal and reference signal processing unit 240 executes processing using a reference signal (RS) such as a demodulation reference signal (DMRS) and a phase tracking reference signal (PTRS).

Further, the DMRS is a known reference signal (pilot signal) between a base station for each terminal and a terminal for estimating a fading channel used for data demodulation. The PTRS is a reference signal for each terminal for the purpose of estimating phase noise which is a problem in a high frequency band.

In addition to the DMRS and the PTRS, the reference signal also includes a channel state information-reference signal (CSI-RS), a sounding reference signal (SRS), a positioning reference signal (PRS) for position information.

Further, the channel includes a control channel and a data channel. The control channel includes a physical downlink control channel (PDCCH), a physical uplink control channel (PUCCH), a random access channel (RACH) (downlink control information (DCI) including random access radio network temporary identifier (RA-RNTI)), a physical broadcast channel (PBCH), and the like.

In addition, the data channel includes a physical downlink shared channel (PDSCH), a physical uplink shared channel (PUSCH), and the like. The data may mean data transmitted via the data channel. The data channel may be read as a shared channel.

In the embodiment, the control signal and reference signal processing unit 240 configures a transmitting unit that performs a predetermined transmission of transmitting acknowledgment regarding the plurality of CCs via the predetermined CC. The predetermined CC may be one or more CCs included in the plurality of CCs. The acknowledgment may be hybrid automatic repeat request (HARQ)-ACK. The HARQ-ACK may be transmitted via a physical uplink control channel (PUCCH). The predetermined transmission may be referred to as HARQ-ACK bundling.

The encoding/decoding unit 250 executes data division/concatenation and channel coding/decoding for each predetermined communication destination (gNB100 or other gNBs).

Specifically, the encoding/decoding unit 250 divides data output from the data transmitting and receiving unit 260 into a predetermined size, and executes the channel coding on the divided data. Further, the encoding/decoding unit 250 decodes data output from the modulation and demodulation unit 230 and concatenates the decoded data.

The data transmitting and receiving unit 260 executes transmission and reception of a protocol data unit (PDU) and a service data unit (SDU). Specifically, the data transmitting and receiving unit 260 executes assembling and disassembling of the PDU/SDU and the like in a plurality of layers (such as medium access control layer (MAC), radio link control layer (RLC), packet data convergence protocol layer (PDCP), and the like). Further, the data transmitting and receiving unit 260 executes data error correction and retransmission control based on hybrid automatic repeat request (hybrid ARQ).

A control unit 270 controls each functional block constituting the UE 200. In particular, in the present embodiment, the control unit 270 uses the DCI received via the predetermined CC when the component carrier group (hereinafter, CC group) composed of the plurality of CCs is applied, thereby controlling the communication of the plurality of CCs. The predetermined CC may be one or more CCs included in the plurality of CCs. The control unit 270 determines whether or not a predetermined condition is satisfied. The predetermined condition may be that the CC group is applied, that is, the communication of the plurality of CCs is controlled using one DCI received via the predetermined CC.

### (3) CC Group

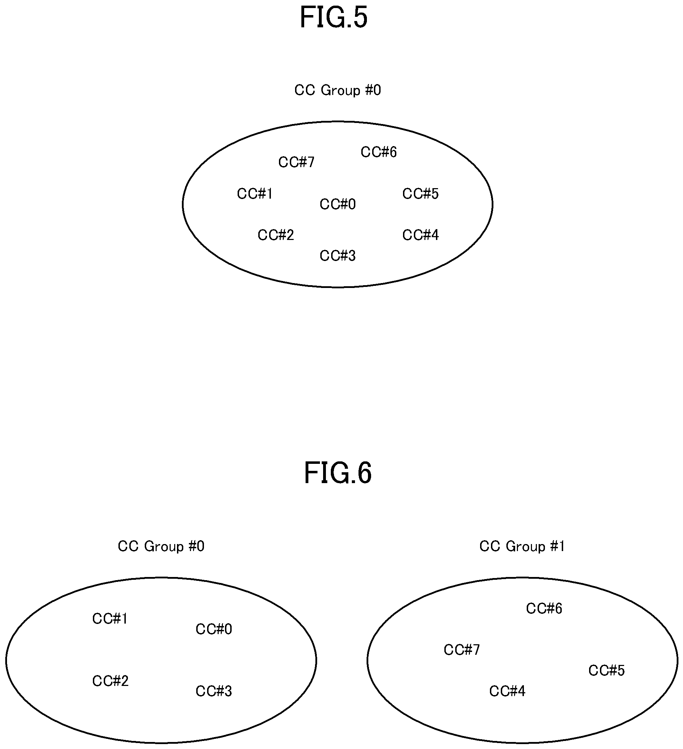

Figs. 5 and 6 are diagrams for describing the CC group according to an embodiment. As described above, the CC group includes the plurality of CCs.

As illustrated in Fig. 5, one CC group may be configured. Fig. 5 exemplifies a case where CC#0 to CC#7 are configured in CC group #0. The CC group #0 may be referred to as a serving cell group. The CC group #0 may be configured by upper layer parameters. For example, the CC group #0 may be configured by an RRC message. In the case where one CC group is configured, the plurality of CCs included in the CC group may be defined in advance.

As illustrated in Fig. 6, the plurality of CC groups may be configured. Fig. 6 exemplifies a case where CC#0 to CC#3 are configured in the CC group #0 and CC#4 to CC#7 are configured in CC group #1. The CC group #0 and the CC group #1 may be referred to as a serving cell group. The CC group #0 and the CC group #1 may be configured by the upper layer parameters. For example, the CC group #0 and the CC group #1 may be configured by the RRC message.

In Figs. 5 and 6, the CC group may be applied to the UE 200 by the information element included in the RRC message or may be applied to the UE 200 by the information element included in the DCI. The CC group applied to the UE 200 may be a CC group selected from the CC groups configured by the upper layer parameters. The application may be referred to as enable or activate.

Similarly, the CC group may not be applied to the UE 200 by the information element included in the RRC message, and may not be applied to the UE 200 by the information element included in the DCI. The CC group not applied to the UE 200 may be a CC group selected from the CC groups configured by the upper layer parameters. The non-application may be referred to as disable or inactivate.

First, the plurality of CCs included in the CC group may be CCs that are consecutive in intra-band. The plurality of CCs included in the CC group may be CCs included in the scheduling cell or may be CCs included in the search space of the PDCCH. A PDCCH search space may be defined by radio network temporary identifier (RNTI) such as system information (SI)-RNTI, random access (RA)-RNTI, temporary cell (TC)-RNTI, cell (C)-RNTI, paging (P)-RNTI, interruption (INT)-RNTI, slot format indication (SFI)-RNTI, transmit power control (TPC)-PUSCH-RNTI, TPC-PUCCH-RNTI, TPC-SRS-RNTI, semi persistent (SP)-channel state information (CSI)-RNTI. The plurality of CCs included in the CC group may be CCs to which the configuration of the serving cell is commonly applied. The configuration of the serving cell may include a TDD DL/UL configuration and an SCS specific carrier list.

Secondly, the CC group may be configured and applied for one purpose or operation. The CC group may be configured and applied for more than two purposes or operations. The predetermined purpose or operation may include UL scheduling, DL scheduling, BWP switching, transmission configuration indicator (TCI) switching, and slot format indicator (SFI).

A case where the CC group is configured and applied for one purpose or operation will be described with reference to Fig. 6. For example, the CC group #0 may be a group for the UL scheduling, and the CC group #1 may be a group for the DL scheduling. The CC group #0 may be a group for the scheduling (DL and UL), and the CC group #1 may be a group for the BWP switching. The CC group #0 may be a group for the TCI switching, and the CC group #1 may be a group for the SFI. With such a configuration, it is possible to flexibly configure the CC group, and furthermore improve performance.

The case where the CC group is configured and applied for more than two purposes or operations will be described with reference to Fig. 6. For example, the CC group #0 may be a group for the scheduling (DL and UL) and the SFI, and the CC group #1 may be a group for the BWP switching and the TCI switching. With such a configuration, the configuration of the gNB 100 can be simplified.

Under such a background, the UE 200 may receive the RRC message including the information element instructing the application of the CC group from the NG-RAN 20. The CC group applied to the UE 200 may be selected from the CC groups configured in the UE 200 by the NG-RAN 20. The information element instructing the application of the CC group may include identification information of the CC group to be applied to the UE 200 and an effect (for example, enable) of applying the CC group. The UE 200 may receive the RRC message including the information element instructing the non-application of the CC group from the NG-RAN 20. The information element instructing the non-application of the CC group may include the identification information of the CC group to be non-applied to the UE 200 and the effect (for example, disable) of applying the CC group. The information element instructing the application of the CC group is bitmap information capable of specifying the CC by the bit position, and each bit is an information element indicating whether or not the CC corresponding to the bit position is included in the CC group. The information element instructing the application of the CC group may be a combination of the identification information of the CC and the information element indicating whether or not the CC group is included in the CC group.

The UE 200 may specify the CC group which should be applied to the UE 200 based on the information element included in the DCI. For example, the UE 200 specifies the CC group to be applied to the UE 200 based on the CI stored in a channel indicator (CI) field included in the DCI. For example, taking the case illustrated in Fig. 6 as an example, when the CI has a value indicating CC#0, the CC group to be applied to UE 200 is the CC group#0 including CC#0. On the other hand, when the CI has a value indicating CC#5, the CC group to be applied to the UE 200 is the CC group#1 including CC#0.

### (4) HARQ-ACK

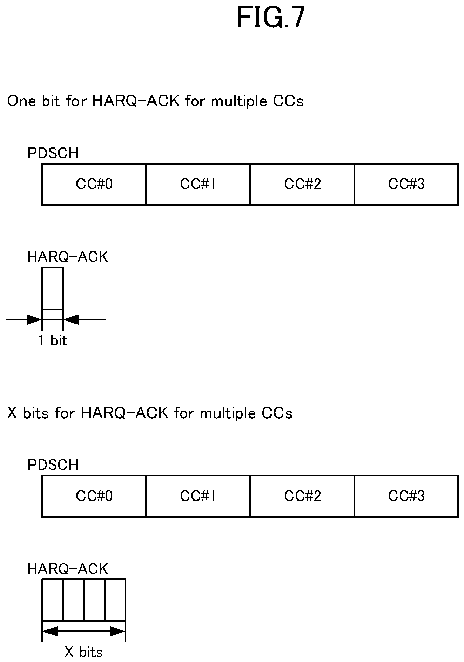

Fig. 7 is a diagram for describing the HARQ-ACK according to the embodiment. Fig. 7 exemplifies the case where the CC group includes CC#0 to CC#3.

Firstly, the case where HARQ-ACK is 1 bit in predetermined transmission (HARQ-ACK bundling) will be exemplified. That is, 1-bit HARQ-ACK is used as the HARQ-ACK for the data received via the CC#0 to CC#3.

In such a case, the UE 200 may transmit a positive HARQ-ACK when reception of data regarding all of the CC#0 to CC#3 succeeds. On the other hand, the UE 200 may transmit a negative HARQ-ACK when reception of data regarding at least one of the CC#0 to CC#3 fails. The UE 200 transmits the HARQ-ACK via a predetermined CC included in the CC#0 to CC#3. The CC used for the transmission of the HARQ-ACK may be the CC used for receiving the DCI used for communication control of the CC#0 to CC#3.

Secondly, the case where the HARQ-ACK is X bits in the predetermined transmission (HARQ-ACK bundling) will be exemplified. That is, X-bits HARQ-ACK is used as the HARQ-ACK for the data received via the CC#0 to CC#3.

For example, the X-bits HARQ-ACK may be generated based on a payload size M of the data received via the plurality of CCs included in the CC group. Specifically, when a data size (for example, transport block size (TBS)) corresponding to 1-bit HARQ-ACK is Y, X is represented by the formula X = M/Y.

Alternatively, the X-bits HARQ-ACK may be configured based on the number N of CCs included in the CC group. Specifically, when the number of CCs corresponding to the 1-bit HARQ-ACK is Z, X is represented by the formula X = N/Z. Note that Fig. 7 exemplifies the case where Z = 1, and thus X is 4 (N/Z = 4/1).

Alternatively, the X-bits HARQ-ACK may be configured by the RRC message. Specifically, when X is set by the RRC message, the 1-bit HARQ-ACK may be a value corresponding to M/X or N/X. Note that M is the payload size M of the data received via the plurality of CCs included in the CC group. N is the number of CCs included in the CC group. Note that Fig. 7 exemplifies the case where X= 4, and thus the number of CCs corresponding to the 1-bit HARQ-ACK is 1 (N/X = 4/4).

### (5) Operation Example

### (5.1) Operation Example 1

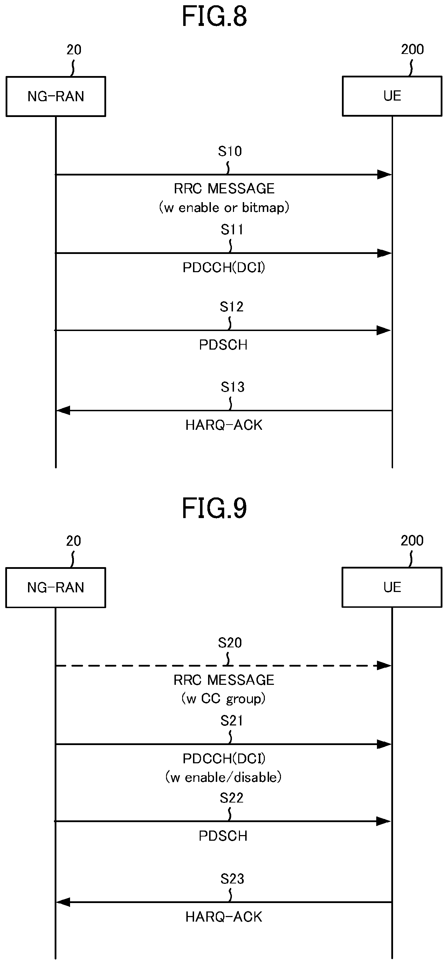

As illustrated in Fig. 8, in step S10, the UE 100 receives the RRC message including an information element instructing the application of the CC group from the NG-RAN 20. The information element instructing the application of the CC group may include identification information of the CC group to be applied to the UE 200 and an effect (for example, enable) of applying the CC group. Alternatively, the information element instructing the application of the CC group is the bitmap information capable of specifying the CC by the bit position, and each bit may be an information element indicating whether or not the CC corresponding to the bit position is included in the CC group. The information element instructing the application of the CC group may be a combination of the identification information of the CC and the information element indicating whether or not the CC group is included in the CC group.

In step S11, the UE 200 receives one DCI from the NG-RAN 20 via a predetermined CC.

In step S12, the UE 200 receives PDSCH via the plurality of CCs included in the CC group. Here, the UE 200 controls the communication of the plurality of CCs based on the DCI received in step S13. The control of communication may include scheduling of resources used in the CC, and may include specification of a modulation coding scheme (MCS) applied to the CC.

In step S13, the UE 200 transmits the HARQ-ACK regarding the plurality of CCs included in the CC group via a predetermined CC (HARQ-ACK bundling). As described in Fig. 7, the HARQ-ACK may be the 1-bit HARQ-ACK or the X-bits HARQ-ACK. The CC used for the transmission of the HARQ-ACK may be the CC used for the reception of the DCI.

### (5.2) Operation Example 2

As illustrated in Fig. 9, in step S20, the UE 100 receives the RRC message including the information element designating the CC included in the CC group from the NG-RAN 20. The number of CC groups may be one (see Fig. 5) or two or more (see Fig. 6). The UE 200 configures the CC group based on the information element included in the RRC message received in step S10.

In step S21, the UE 200 receives one DCI from the NG-RAN 20 via a predetermined CC. The UE 200 specifies the CC group which should be applied to the UE 200 based on the information element included in the DCI. For example, the UE 200 specifies the CC group to be applied to the UE 200 based on the CI stored in the CI field included in the DCI.

In step S22, the UE 200 receives PDSCH via the plurality of CCs included in the CC group. Here, the UE 200 controls the communication of the plurality of CCs based on the DCI received in step S32. The control of communication may include scheduling of resources used in the CC, and may include the specification of the MCS applied to the CC.

In step S23, the UE 200 transmits the HARQ-ACK regarding the plurality of CCs included in the CC group via a predetermined CC (HARQ-ACK bundling). As described in Fig. 7, the HARQ-ACK may be the 1-bit HARQ-ACK or the X-bits HARQ-ACK. The CC used for the transmission of the HARQ-ACK may be the CC used for the reception of the DCI.

Fig. 9 exemplifies the case where the CC group is set by the RRC message, but the CC group is defined in advance and may be known to the UE 200. In such a case, step S20 described above may be omitted.

### (6) Action and Effect

In the embodiment, the UE 200 performs the predetermined transmission (HARQ-ACK bundling) of transmitting the HARQ-ACK regarding the plurality of CCs via the predetermined CC. According to such a configuration, even when the plurality of CCs are set, it is possible to suppress the increase in resources used for the HARQ-ACK, and it is possible to efficiently implement the CC communication control using the DCI.

In the embodiment, a new concept of the plurality of CCs (CC group) controlled by one DCI received via the predetermined CC is introduced, and the UE 200 controls the CC included in the CC group based on the DCI received via the predetermined CC. With such a configuration, it is possible to efficiently implement the communication control using the DCI even when the plurality of CCs are configured.

### [Modified Example 1]

Hereinafter, Modified Example 1 of the embodiment will be described. The differences from the embodiment will be described below.

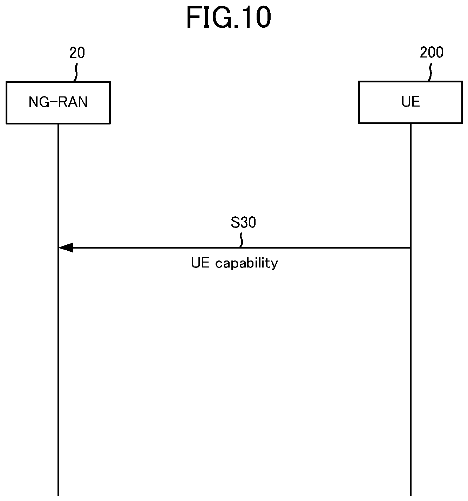

Specifically, the UE 200 transmits to the network (NG-RAN 20) an information element indicating whether or not the UE 200 has capability to perform the predetermined transmission (HARQ-ACK bundling). Specifically, as illustrated in Fig. 10, in step S30, the UE 200 transmits (reports) to the NG-RAN 20 a UE capability that includes the information element indicating whether or not the UE 200 has capability to perform the predetermined transmission (HARQ-ACK bundling).

Although not particularly limited, the UE 200 may execute step S30 when the NG-RAN 20 and the RRC connection are configured. In other words, step S30 may be executed before the processing illustrated in Fig. 8 or Fig. 9.

### [Modified Example 2]

Hereinafter, Modified Example 2 of the embodiment will be described. The differences from the embodiment will be described below.

In the embodiment, when a CC group including a plurality of CCs is applied to the UE 200, HARQ-ACK bundling is applied to CCs included in a CC group as a target. That is, a predetermined condition for applying the HARQ-ACK bundling is that the CC group is applied.

On the other hand, in Modified Example 1, the predetermined condition of applying the HARQ-ACK bundling is not limited to the CC group being applied.

The predetermined condition may be that DCIs received via a predetermined CC designate the same bundling group (first predetermined condition). In other words, the HARQ-ACK bundling may be applied to reception of PDSCH allocated by the DCI that designates the same bundling group. The DCI may include an information element indicating a bundling group. Note that the bundling group may be a CC group. In this case, the CCs included in the bundling group may be configured by the RRC message or may be defined in advance, similar to the CC group described above. The CCs that may be included in the bundling group may be the same as the CCs included in the CC group described above, or may be different from the CCs included in the CC group described above.

The predetermined condition may be that DCIs received via the predetermined CC designate the same feedback slot (second predetermined condition). In other words, the HARQ-ACK bundling may be applied to reception of PDSCH allocated by the DCI that designates the same feedback slot. The feedback slot is a slot used for the transmission of the HARQ-ACK (for example, PUCCH). Note that the bundling group may be a CC group. In this case, the plurality of CCs to which the HARQ-ACK bundling is applied may be configured by the RRC message or may be defined in advance, similar to the CC group described above. The plurality of CCs to which the HARQ-ACK bundling may be applied may be CCs included in the bundling group. The plurality of CCs to which the HARQ-ACK bundling is applied may be the same as the CCs included in the CC group described above, or may be different from the CCs included in the CC group described above.

The predetermined condition may be that the DCI received via the predetermined CC instructs that HARQ-ACK bundling is applied (third predetermined condition). The HARQ-ACK bundling may be applied for the reception of the PDSCH to which the DCI instructing to apply the HARQ-ACK bundling is allocated. The DCI may include an information element (enable) indicating that the HARQ-ACK bundling is applied. The DCI may include an information element (disable) indicating that the HARQ-ACK bundling is not applied. Note that the bundling group may be a CC group. In this case, the plurality of CCs to which the HARQ-ACK bundling is applied may be configured by the RRC message or may be defined in advance, similar to the CC group described above. The plurality of CCs to which the HARQ-ACK bundling may be applied may be CCs included in the bundling group or CCs used for the reception of the DCI that designates the same feedback slot. The plurality of CCs to which the HARQ-ACK bundling is applied may be the same as the CCs included in the CC group described above, or may be different from the CCs included in the CC group described above.

The predetermined condition may be that the RRC message instructs to apply the HARQ-ACK bundling (fourth predetermined condition). The RRC message may include an information element (enable) indicating that the HARQ-ACK bundling is applied. The RRC message may include an information element (disable) indicating that the HARQ-ACK bundling is not applied. The RRC message is bitmap information capable of specifying the CC by the bit position, and each bit may include an information element indicating whether or not the HARQ-ACK bundling is applied to the CC corresponding to the bit position. The RRC message may include identification information of the CC to which the HARQ-ACK bundling is applied. The plurality of CCs to which the HARQ-ACK bundling is applied may be configured by the RRC message or may be defined in advance, similar to the CC group described above. The plurality of CCs to which the HARQ-ACK bundling may be applied may be CCs included in the bundling group or CCs used for the reception of the DCI that designates the same feedback slot. The plurality of CCs to which the HARQ-ACK bundling is applied may be the same as the CCs included in the CC group described above, or may be different from the CCs included in the CC group described above.

As described above, the UE 200 (control unit 270) may determine whether the predetermined condition (for example, first predetermined condition to third predetermined condition described above) is satisfied based on the RRC message including the information element indicating whether to apply the HARQ-ACK bundling. The UE 200 (control unit 270) may determine whether the predetermined condition (for example, fourth predetermined condition described above) is satisfied based on the RRC message including the information element indicating whether to apply the HARQ-ACK bundling.

Furthermore, the UE 200 (control unit 270) may determine whether or not the predetermined condition is satisfied based on the RRC message and the DCI. For example, the UE 200 may set the plurality of CCs to which the HARQ-ACK bundling may be applied by the RRC message, and may specify the CC to which the HARQ-ACK bundling is applied based on the DCI among the set CCs.

### [Other Embodiments]

The contents of the present invention have been described above according to the embodiments, but the present invention is not limited to these descriptions, and it is obvious to those skilled in the art that various modifications and improvements can be made.

In the embodiment described above, the RRC message and the DCI have been mainly described, but the embodiment is not limited thereto. For example, the UE 200 may apply the CC group based on the information element used in MAC control element (MAC CE).

Although not particularly mentioned in the above-described embodiment, when the HARQ-ACK bundling is applied, code block group (CBG)-based feedback (for example, HARQ-ACK) may not be configured.

Although not particularly mentioned in the above-mentioned embodiment, in the case where the communication of the plurality of CCs is controlled by one DCI, that is, in the case where the CC group is applied, the information element included in the DCI are commonly applied to the plurality of CCs. For example, the information elements commonly applied to the plurality of CCs are a HARQ process number (HPN), a redundancy version (RV), a new data indicator (NDI), a PUCCH resource indicator (PRI), a PDSCH-to-HARQ timing indicator, and the like.

Although not particularly mentioned in the above embodiment, the UE 200 may generate a negative HARQ-ACK (may be referred to as NACK) having a bit size corresponding to the reception without PDCCH and/or PDSCH in the generation of HARQ-ACK code block. The UE 200 can specify a reception occasion in which the PDCCH and/or the PDSCH do not exist by a downlink assignment index (DAI).

Although not particularly mentioned in the above-described embodiment, the present invention may be applied even to the case where the communication of one CC is controlled by one DCI.

Moreover, the block diagram used for describing the embodiments (Fig. 4) illustrates blocks of functional unit. Those functional blocks (structural components) can be realized by a desired combination of at least one of hardware and software. Methods for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by the plurality of devices. The functional blocks may be realized by combining software with the one device or the plurality of devices mentioned above.

Functions include determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting may be called a transmitting unit or a transmitter. For any of the above, as explained above, the realization method is not particularly limited to any one method.

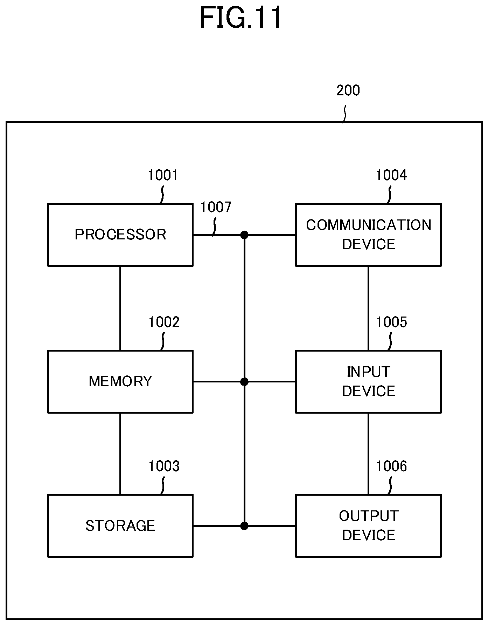

Furthermore, the UE 100 (the device) explained above can function as a computer that performs the processing of the radio communication method of the present disclosure. Fig. 11 is a diagram illustrating an example of a hardware configuration of the device. As illustrated in Fig. 11, the device can be configured as a computer device including a processor 1001, a memory 1002, a storage 1003, a communication device 1004, an input device 1005, an output device 1006, a bus 1007, and the like.

Furthermore, in the following description, the term "device" can be replaced with a circuit, device, unit, and the like. Hardware configuration of the device can be constituted by including one or plurality of the devices illustrated in the figure, or can be constituted by without including a part of the devices.

The functional block (see Fig. 4) of the device can be realized by any of hardware elements of the computer device or a desired combination of the hardware elements.

Moreover, the processor 1001 performs operation by loading a predetermined software (program) on hardware such as the processor 1001 and the memory 1002, and realizes various functions of the device by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

Moreover, the processor 1001 reads a program (program code), a software module, data, and the like from the storage 1003 and/or the communication device 1004 into the memory 1002, and executes various types of processing according to the data. As the program, a program that is capable of executing on the computer at least a part of the operation described in the above embodiments is used. Alternatively, various types of processing described above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main memory), and the like. The memory 1002 can store therein a program (program codes), software modules, and the like that can execute the method according to the embodiment of the present disclosure.

The storage 1003 is a computer readable recording medium. Examples of the storage 1003 include an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these types of hardware.

Notification of information is not limited to that described in the aspect/embodiment in the present disclosure, and may be performed by using a different method. For example, the notification of information may be performed by physical layer signaling (for example, Downlink Control Information (DCI), Uplink Control Information (UCI), upper layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the aspects/embodiments described in the present disclosure can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments described in the present disclosure may be exchanged. For example, the various steps and the sequence of the steps of the methods described in the present disclosure are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input / output can be overwritten, updated, or added. The information can be eliminated after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like described in the present disclosure may be represented by using any of a variety of different technologies. For example, data, instructions, commands, information, signals, bits, symbols, chips, and the like which may be described throughout the above description may be represented by a voltage, a current, an electromagnetic wave, a magnetic field or magnetic particles, an optical field or photons, or any combination thereof.

It should be noted that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like described in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (remote radio head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows communication between a base station and a mobile station to be replaced with communication between a plurality of mobile stations (for example, may be referred to as device-to-device (D2D), vehicle-to-everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The radio frame may be composed of one or a plurality of frames in the time domain. One frame or each of the plurality of frames in the time domain may be referred to as a subframe.

The subframe may be composed of one or a plurality of slots in the time domain. The subframe may also be a fixed time length (for example, 1 ms) that does not depend on numerology.

The numerology may be a communication parameter applied to at least one of transmission and reception of a certain signal or channel. The numerology may indicate at least one of, for example, subcarrier spacing (SCS), a bandwidth, a symbol length, a cyclic prefix length, a transmission time interval (TTI), the number of symbols per TTI, a radio frame configuration, specific filtering processing performed by a transceiver in a frequency domain, specific windowing processing performed by a transceiver in a time domain, and the like.

The slot may be composed of one or a plurality of symbols (orthogonal frequency division multiplexing (OFDM)) symbols, single carrier frequency division multiple access (SC-FDMA) symbol, and the like in the time domain. The slot may be a time unit based on numerology.

The slot may include a plurality of minislots. Each minislot may be composed of one or a plurality of symbols in the time domain. In addition, the minislot may be referred to as a sub-slot. The minislot may be configured with a smaller number of symbols than that of the slot. A PDSCH (or PUSCH) transmitted in a time unit larger than a minislot may be referred to as a PDSCH (or PUSCH) mapping type A. A PDSCH (or PUSCH) transmitted using a minislot may be referred to as a PDSCH (or PUSCH) mapping type B.

All of the radio frame, the subframe, the slot, the minislot, and the symbol represent time units at the time of transmitting a signal. The radio frame, the subframe, the slot, the minislot, and the symbol may have different names corresponding thereto, respectively.

For example, one subframe may be referred to as a transmission time interval (TTI), a plurality of consecutive subframes may be referred to as TTI, and one slot or one minislot may be referred to as TTI. That is, at least one of the subframe and the TTI may be a subframe (1 ms) in the existing LTE, a period (for example, 1 to 13 symbols) shorter than 1 ms, or a period longer than 1 ms. Note that a unit representing TTI may be called a slot, a minislot, or the like instead of a subframe.

Here, the TTI refers to, for example, a minimum time unit of scheduling in radio communication. For example, in an LTE system, a base station performs scheduling that allocates radio resources (frequency bandwidths, transmission power, and the like, that can be used in each user terminal) to each user terminal in a unit of the TTI. Note that the definition of the TTI is not limited thereto.

The TTI may be a transmission time unit such as a channel-encoded data packet (transport block), a code block, and a codeword, or may also be a processing unit such as scheduling or link adaptation. Note that when the TTI is given, a time interval (for example, the number of symbols) in which the transport block, the code block, the codeword, and the like are actually mapped may be shorter than the TTI.

Note that when one slot or one minislot is referred to as the TTI, one or more TTIs (that is, one or more slots or one or more minislots) may be the minimum time unit of the scheduling. Further, the number of slots (the number of minislots) constituting the minimum time unit of the scheduling may be controlled.

A TTI having a time length of 1 ms may be referred to as a normal TTI (TTI in LTE Rel. 8-12), a normal TTI, a long TTI, a normal subframe, a normal subframe, a long subframe, a slot, or the like. A TTI shorter than the normal TTI may be referred to as a shortened TTI, a short TTI, a partial TTI (partial or fractional TTI), a shortened subframe, a short subframe, a minislot, a subslot, a slot, and the like.

Note that the long TTI (for example, normal TTI, subframe, and the like) may be read as a TTI having a time length exceeding 1 ms, and the short TTI (for example, a shortened TTI) may be read as a TTI that is less than the long TTI and has a TTI length of 1 ms or more.

The resource block (RB) is a resource allocation unit in the time domain and the frequency domain, and may include one or a plurality of consecutive subcarriers in the frequency domain. The number of subcarriers included in the RB may be the same regardless of the numerology, for example, 12. The number of subcarriers included in the RB may be determined based on the numerology.

Further, the time domain of the RB may include one or a plurality of symbols, and may have a length of 1 slot, 1 minislot, 1 subframe, or 1 TTI. 1 TTI, one subframe, and the like may be composed of one or a plurality of resource blocks.

Note that one or a plurality of RBs may be referred to as a physical resource block (physical RB: PRB), a sub-carrier group (SCG), a resource element group (REG), a PRB pair, an RB pair, and the like.

In addition, the resource block may be composed of one or a plurality of resource elements (RE). For example, 1 RE may be a radio resource region of one subcarrier and one symbol.

Abandwidth part (BWP) (may be called a partial bandwidth, and the like) may represent a subset of consecutive common resource blocks (RBs) for certain numerology in a certain carrier. Here, the common RB may be specified by an RB index based on a common reference point of the carrier. The PRB may be defined in a certain BWP and numbered within the BWP.

The BWP may include a UL BWP and a DL BWP. One or a plurality of BWPs may be configured in one carrier for the UE.

At least one of the configured BWPs may be active, and it may not be assumed that the UE transmits and receives a predetermined signal/channel outside the active BWP. Note that "cell", "carrier", and the like in the present disclosure may be read as "BWP".

The structures of the radio frame, the subframe, the slot, the minislot, the symbol, and the like, described above are merely examples. For example, the configurations of the number of subframes included in a radio frame, the number of slots per subframe or radio frame, the number of minislots included in the slot, the number of symbols and RBs included in the slot or minislot, the number of subcarriers included in the RB, the number of symbols in the TTI, the symbol length, the cyclic prefix (CP) length, and the like can be variously changed.

The terms "connected", "coupled", or any variation thereof means any direct or indirect connection or coupling between two or more elements, and may mean that one or more intermediate elements are provided between two elements "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with a "unit", a "circuit" a, "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element needs to precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout the present disclosure, for example, during translation, if articles such as "a", "an", and "the" in English are added, in the present disclosure, these articles shall include plurality of nouns following these articles.

The term "determining" used in the present disclosure may include a wide variety of operations. The "determining" may include, for example, judging, calculating, computing, processing, deriving, investigating, looking up (search, inquiry) (for example, searching in a table, a database or another data structure), and may include ones regarding ascertaining as the "determining". In addition, the "determining" may include one regarding "receiving" (for example, receiving information), transmitting (for example, transmitting information), an input, an output, accessing (for example, accessing data in memory) as "determining". In addition, the "determining" may include ones regarding ones such as resolving, selecting, choosing, establishing, and comparing as "determining". That is, the "determining" can include considering some operation as performing the "determining". In addition, the "determining" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### Reference Signs List

- 10: Radio communication system
- 20: NG-RAN
- 100: gNB
- 200: UE
- 210: Radio signal transmitting and receiving unit
- 220: Amplifier unit
- 230: Modulation and demodulation unit
- 240: Control signal and reference signal processing unit
- 250: Encoding/decoding unit
- 260: Data transmitting and receiving unit
- 270: Control unit
- 1001: Processor
- 1002: Memory
- 1003: Storage
- 1004: Communication device
- 1005: Input device
- 1006: Output device
- 1007: Bus

## Claims

1. A terminal, comprising:
a receiving unit that receives data via a plurality of component carriers; and
a transmitting unit that executes a predetermined transmission to transmit an acknowledgment for the plurality of component carriers.

2. The terminal according to claim 1, further comprising:
a control unit that uses one downlink control information received via a predetermined component carrier to determine to apply the predetermined transmission when the communication of the plurality of component carriers is controlled.

3. The terminal according to claim 1 or 2, further comprising:
a control unit that determines whether to apply the predetermined transmission based on an information element included in an RRC message received from a network.

4. The terminal according to claim 1 or 2, further comprising:
a control unit that determines whether to apply the predetermined transmission based on an information element included in downlink control information received from a network.

5. The terminal according to any one of claims 1 to 4, wherein
the transmitting unit transmits an information element indicating whether there is capability to execute the predetermined transmission to the network.
